# EUROPÄISCHE PATENTSCHRIFT

(11) **EP 1 927 486 B1**
(45) Veröffentlichungstag und Bekanntmachung des Hinweises auf die Patenterteilung: **11.01.2012**
(21) Anmeldenummer: 07016051.0
(22) Anmeldetag: 16.08.2007
(51) Int. Cl.: B60G 17/02

(54) **Höhenverstellvorrichtung für Radaufhängungen von Kraftfahrzeugen**
Height adjustment device for wheel suspensions in motor vehicles
Dispositif de réglage en hauteur pour suspensions de roues de véhicules automobiles

(30) Priorität: 01.12.2006 DE 102006056762
(43) Veröffentlichungstag der Anmeldung: 04.06.2008
(73) Patentinhaber: AUDI AG, 85045 Ingolstadt (DE)
(72) Erfinder: Michel, Wilfried, 93339 Riedenburg (DE)
(74) Vertreter: Asch, Konrad

(56) Entgegenhaltungen:
- WO-A-2006/012858
- DE-A1- 10 122 542
- DE-A1- 19 510 032
- DE-A1- 19 955 410
- DE-A1-102006 001 575

## Beschreibung

Die Erfindung betrifft eine Höhenverstellvorrichtung für Radaufhängungen von Kraftfahrzeugen gemäß dem Oberbegriff des Patentanspruches 1.

Eine derartige Höhenverstellvornchtung zeigt beispielsweise die DE 101 22 542 A1, bei der ein oberhalb einer Tragfeder (einer Schraubendruckfeder oder einer Gasdruckfeder) eines mit einem Teleskop-Stoßdämpfers kombinierten Federbeines angeordneter Elektromotor über einen in die Tragfeder einragenden Kugelschraubtrieb den Federteller der Tragfeder zur stufenlosen Niveauverstellung der Karosserie des Kraftfahrzeuges axial verstellt. Durch die WO 2006/012858 A1 ist eine weitere Höhenverstellvorrichtung bekannt, bei der unterhalb der Tragfeder und um den Teleskop-Stoßdämpfer als Radaufhängungselement herum ein elektromotorisch angetriebener Schraubtrieb zur Höhenverstellung vorgesehen ist.

Aufgabe der Erfindung ist es, eine Höhenverstellvorrichtung der gattungsgemäßen Art vorzuschlagen, die eine besonders robuste und fertigungstechnisch günstige Konstruktion aufweist und die eine baulich günstige Anordnung ermöglicht.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.
Erfindungsgemäß wird vorgeschlagen, dass das Stellgetriebe der Höhenverstellvorrichtung einen auf einer Innenhülse drehbar gelagerten, axial unverschiebbar gehaltenen Stellring aufweist, in den an seinem Außenumfang zumindest eine zur Umfangsrichtung schräge, nutförmige Stellkulisse eingearbeitet ist, und dass der Federteller mit einem zylindrischen Führungsabschnitt auf dem Stellring und der Innenhülse axial verschiebbar geführt ist. Der Führungsabschnitt des Federteller 5 kann zumindest einen in die Stellkulisse einragenden Mitnehmer tragen. Die Stellhülse kann mittels eines Getriebes über den Elektromotor verdrehbar sein.

Zur Erzielung einer über den Umfang gleichmäßigen Abstützung des Federtellers der Tragfeder können bevorzugt über den Umfang der Stellhülse drei um 120 Grad versetzt zueinander angeordnete, geometrisch gleiche Stellkulissen eingearbeitet sein, in die drei ebenfalls 120 Grad versetzt zueinander ausgebildete Mitnehmer des Stellringes in die Stellkulissen einragen.

Besonders vorteilhaft können ferner die schräg verlaufenden Stellkulissen mit sattelförmigen Vertiefungen an deren Halteflanken versehen sein. Die Vertiefungen, die definierten Niveaustellungen des Kraftfahrzeuges entsprechen, stellen eine Rastierung dar, die ansonsten aus der Federbelastung resultierende Rückstellkräfte auf den Stellring und den Elektromotor eliminieren. Alternativ können die schräg verlaufenden Stellkulissen mit rotationssymmetrischen Plateaus an deren Halteflanken versehen sein, um ebenfalls Rückstellmomente auszuschließen.

Bevorzugt können drei Vertiefungen oder Plateaus zur Definierung von drei Niveaustellungen der Karosserie des Kraftfahrzeuges vorgesehen sein, zur Darstellung einer Normalniveaustellung, einer Hochniveaustellung bei z.B. unebenem Gelände und einer Tiefniveaustellung bei z.B. hohen Fahrzeuggeschwindigkeiten.

Zur Vermeidung höherer Stellkräfte und Verschleißerscheinungen können die Mitnehmer im Bereich der Stellkulissen als wälzgelagerte Rollen ausgeführt sein. Zudem kann der Stellring an seiner druckbeaufschlagten Stirnseite über ein Axialwälzlager am Innenring abgestützt sein.

Eine räumlich vorteilhafte Anordnung der Höhenverstellvorrichtung wird erzielt, wenn der Elektromotor seitlich und oberhalb des Stellringes angeordnet ist und den Stellring über ein selbsthemmendes Schneckengetriebe direkt oder indirekt verstellt.

Dabei kann das selbsthemmende Schneckengetriebe über ein mit dem Schneckenrad trieblich verbundenes Zahnritzel und ein am Stellring angeordnetes Zahnrad auf den Stellring wirken, wobei das Zahnritzel funktionell vorteilhaft in einer Lagerstelle im Befestigungsflansch der Innenhülse drehbar gelagert ist.

Steuerungstechnisch günstig kann bei Umschaltung der Niveaustellungen die Drehwinkellage des Stellringes relativ zum Federteller direkt oder indirekt erfassbar und auswertbar sein; dies stellt sicher, dass bei jeder Umschaltung der Niveaustellungen exakt die Mitnehmer in die jeweilige Vertiefung einfahren bzw. auf das jeweilige Plateau auffahren. Die Erfassung der Drehwinkellage kann in besonders einfacher Weise erfolgen, indem im Elektromotor ein Winkelcodierer an sich bekannter Bauart zur Erfassung der Position des Stellringes vorgesehen ist. Natürlich setzt diese Lösung eine definierte Zuordnung der Getriebeelemente beim Zusammenbau der Höhenverstellvorrichtung voraus.

In vorteilhafter Weise können die Innenhülse, der Stellring, der Federteller mit Führungsabschnitt, sowie der Elektromotor mit Getriebe eine Montageeinheit bilden, die mit dem Aufbau oder einer am Aufbau befestigbaren Lagerkonsole verschraubbar ist. Neben einer Montagevereinfachung ermöglicht diese Lösung auch, Fahrzeuge mit Höhenverstellvorrichtung und bei Einbau eines Adapters mit einer in Normalniveaustellung positioniertem Federteller ohne Höhenverstellvorrichtung zu fertigen.
Zusätzlich kann zu einer vorteilhaften Beeinflussung der Federrate der Tragfeder innerhalb der Innenhülse ein um die Kolbenstange des Stoßdämpfers angeordneter, am Aufbau abgestützter, gummielastischer Anschlagpuffer vorgesehen sein, wobei der Anschlagpuffer mit Bezug zur Position des Federtellers so angeordnet ist, dass er in der Tiefniveaustellung als Zusatzfeder wirksam ist und somit sowohl eine sportlichere Abstimmung der Radaufhängung als auch eine progressivere Federrate ermöglicht.

Um eine zuverlässige Funktion der Höhenverstellvorrichtung sicherzustellen, kann zwischen dem Befestigungsflansch der Innenhülse und dem Federteller eine den Stellring und das Getriebe abdeckende, gummielastische Schutzmanschette und zwischen der freien Stirnseite der Innenhülse und dem zylindrischen Führungsabschnitt des Federtellers eine weitere gummielastische Schutzmanschette vorgesehen sein. Damit wird insbesondere einem Eindringen von Schmutz und Feuchtigkeit im Fahrbetrieb entgegengewirkt.

Das Stellgetriebe der Höhenverstellvorrichtung kann abweichend zur vorstehenden Ausführung der Erfindung auch um das zylindrische Gehäuse des Stoßdämpfers als Radaufhängungselement des Kraftfahrzeuges angeordnet sein und auf den unteren Federteller der Tragfeder wirken. Damit ist es zwar der ungefederten Masse des Kraftfahrzeuges zuzuordnen, kann aber zumindest teilweise baulich günstig innerhalb der Felgenschüssel des jeweiligen Rades der Radaufhängung angeordnet werden und bewirkt keine Zunahme der Bauhöhe der kompletten Radaufhängung.

Besonders vorteilhaft können wiederum die Innenhülse, der Stellring, der untere Federteller mit Führungsabschnitt, sowie der Elektromotor mit Getriebe eine Montageeinheit bilden, die in einfacher Weise auf das Gehäuse des Stoßdämpfers aufsteckbar ist.

Dazu kann in fertigungstechnisch einfacher Ausführung die Innenhülse mit einem Bereich kleineren Innendurchmessers an Ausbuchtungen des Gehäuses des Stoßdämpfers axial abgestützt sein.

Zur Erzielung einer robusten Lagerung kann des weiteren der Stellring mittels zweier, axial zueinander beabstandeter Schrägschulterlager axial unverschiebbar auf der Innenhülse drehbar angeordnet sein.

Schließlich kann der Elektromotor unterhalb des Federtellers tangential zu diesem angeordnet sein, wobei dessen Schnecke direkt auf das am Stellring ausgebildetes Schneckenrad wirkt. Daraus resultiert ein verminderter Teileaufwand bei direkter Betätigung des Stellringes und eine baulich vorteilhafte Anordnung des Elektromotors.

Zwei Ausführungsbeispiele der Erfindung sind im folgenden mit weiteren Einzelheiten näher erläutert. Die schematische Zeichnung zeigt in:
- Fig. 1: eine teilweise dargestellte Radaufhängung für Kraftfahrzeuge, mit einer elektromechanischen Höhenverstellvorrichtung in raumbildlicher Darstellung, teilweise aufgebrochen;
- Fig. 2: die als Montageeinheit ausgebildete Höhenverstellvorrichtung nach Fig. 1, mit einer Innenhülse, einem Stellring, einem oberen Federteller mit Führungsabschnitt und einem antreibenden Elektromotor;
- Fig. 3: den Stellring der Höhenverstellvorrichtung gemäß den Fig. 1 und 2, in raumbildlicher Darstellung;
- Fig. 4: eine Abwicklung einer der drei in den Stellring eingearbeiteten Stellkulissen; und
- Fig. 5: eine alternative Höhenverstellvorrichtung mit Anordnung des Stellgetriebes am unteren Federteller der Tragfeder.

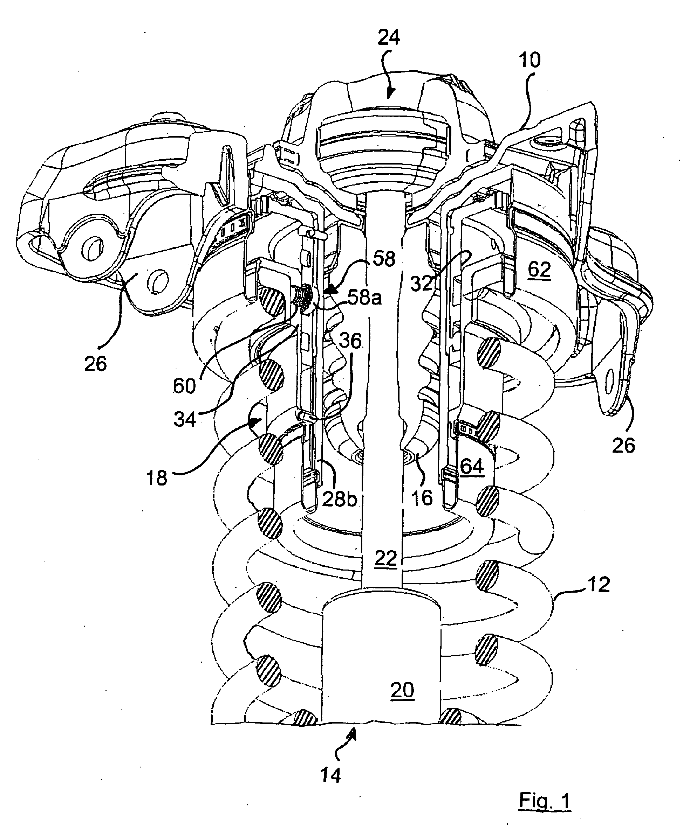

In der Fig. 1 ist teilweise eine Radaufhängung für ein Kraftfahrzeug dargestellt, mit im wesentlichen einer Lagerkonsole 10, einer Schraubendruckfeder als Tragfeder 12, einem nur teilweise ersichtlichen Teleskop-Stoßdämpfer 14, einem gummielastischen Anschlagpuffer 16 und einer innerhalb der Tragfeder 12 und radial außerhalb des Anschlagpuffers 16 liegenden, noch zu beschreibenden Höhenverstellvorrichtung 18 zur Einstellung mehrerer Niveaustellungen der Karosserie des Kraftfahrzeuges relativ zur Fahrbahn. Die Lagerkonsole 10 ist in nicht dargestellter Weise mit dem Aufbau des Kraftfahrzeuges verschraubt.

Die Radaufhängung des Kraftfahrzeuges kann z.B. eine Federbeinachse sein, wobei das Zylindergehäuse 20 des Stoßdämpfers 14 an einem nicht dargestellten Radträger oder radführenden Lenker befestigt ist, während die Kolbenstange 22 über ein nicht näher beschriebenes Dämpferlager 24 an der Lagerkonsole 10 angelenkt ist. Ferner sind an der Lagerkonsole 10 in bekannter Weise U-förmige Aufnahmen 26 ausgebildet, an denen radführende Lenker (nicht dargestellt) angelenkt sind.

Der um die Kolbenstange 22 angeordnete Anschlagpuffer 16 ist an der Lagerkonsole 10 festgelegt und gerät bei einer definierten Einfederung der Radaufhängung als Zusatzfeder wirkend mit dem Zylindergehäuse 20 in Kontakt.

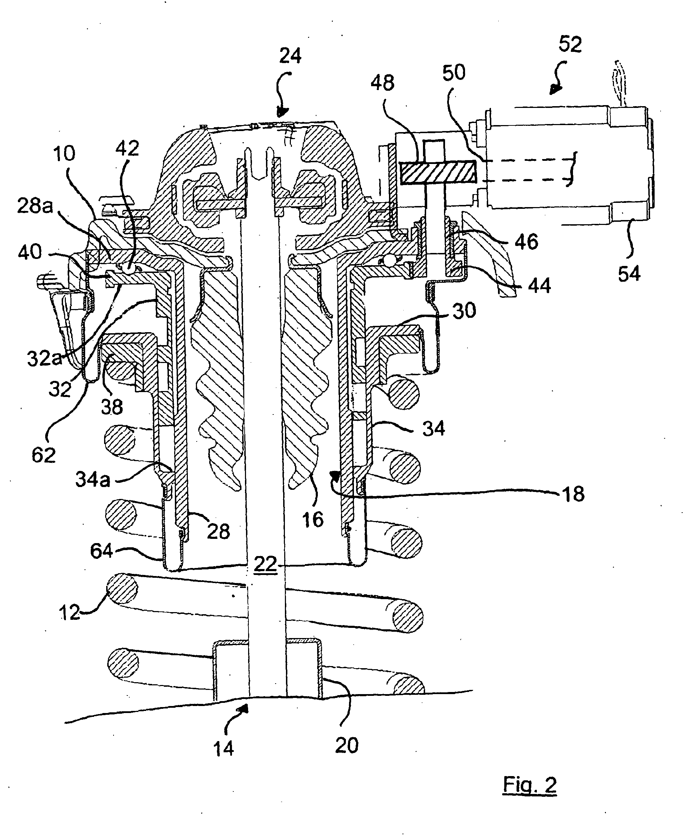

Die Fig. 2 zeigt in einer Schnittansicht die Höhenverstellvorrichtung 18, die sich im wesentlichen zusammensetzt aus einer innerhalb der Tragfeder 12 positionierten Innenhülse 28 mit einem an der Lagerkonsole 10 abgestützten Befestigungsflansch 28a, einem an der Innenhülse 28 an deren Außenumfang verdrehbar geführten Stellring 32, einem ringförmigen, oberen Federteller 30 mit einem nach unten abragenden, zylindrischen Führungsabschnitt 34, der auf dem Außenumfang des Stellringes 32 und an einem unteren Bundabschnitt 34a axial verschiebbar, jedoch mittels eines oder mehrerer Führungsstifte 36 (Fig. 1) - die in korrespondierende Längsschlitze 28b der Innenhülse 28 eingreifen - unverdrehbar gehalten ist.

Die Tragfeder 12 ist über einen Dämpfungsring 38 an dem Federteller 30 abgestützt, während deren untere, nicht dargestellte Windung an einem am Zylindergehäuse 20 des Stoßdämpfers 14 befestigten, unteren Federteller aufgenommen ist.

Der Stellring 32 ist über einen als Zahnrad 40 ausgeführten Stützflansch und über ein Axialwälzlager (Drucklager) 42 an dem Befestigungsflansch 28a der Innenhülse 28 axial abgestützt und kann über ein mit dem Zahnrad 40 kämmendes Zahnritzel 44 verdreht werden.

Das Zahnritzel 44 ist in einer Lagerstelle 46 des Befestigungsflansches 28a drehbar gelagert und in nicht näher dargestellter Weise über ein selbsthemmendes Schneckengetriebe mit einem Schneckenrad 48 und einer Schnecke 50 von einem seitlich und oberhalb des Stellringes 32 angeordneten Elektromotor 52 angetrieben. An den Elektromotor 52 ist ein nur angedeuteter Winkelcodierer 54 angebaut, mittels dem die jeweilige Drehwinkellage des Stellringes 32 erfassbar und in einem nicht dargestellten, elektronischen Steuergerät entsprechend auswertbar ist. Durch entsprechende Ansteuerung des Elektromotors 52 kann somit der Stellring 32 über das Schneckengetriebe 48, 50 und das Getriebe mit dem Zahnritzel 44 und dem Zahnrad 40 in beiden Drehrichtungen in definierte Drehwinkellagen relativ zur Innenhülse 28 bzw. zum Federteller 30 mit dem Führungsabschnitt 34 verstellt werden.

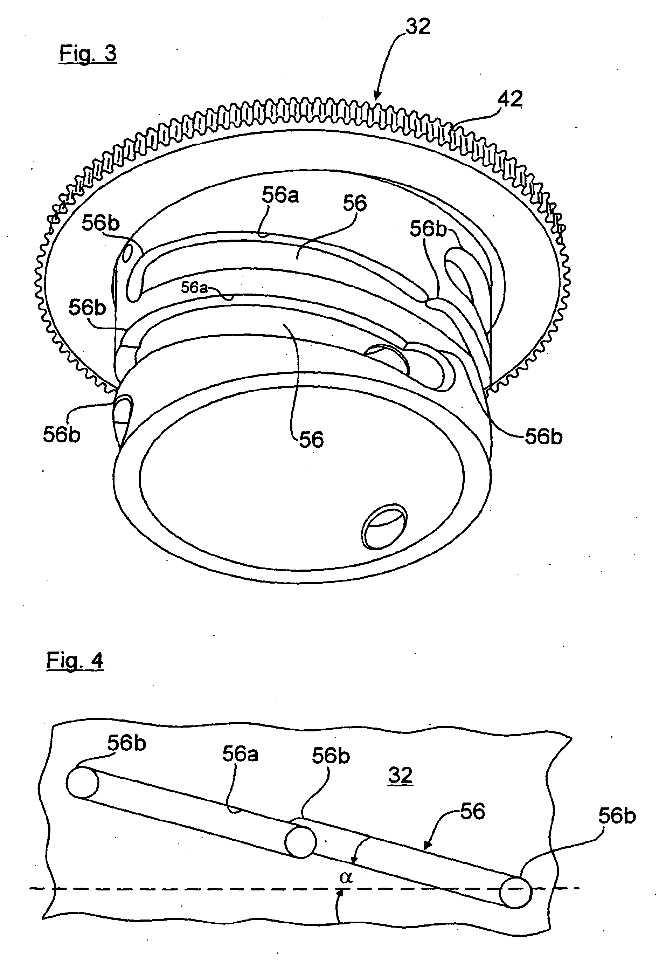

In den Stellring 32 sind an dessen zylindrischem Außenumfang (vgl. insbesondere Fig. 3) drei jeweils um 120 Grad zueinander versetzte, übereinander liegende, nutförmige Stellkulissen 56 eingearbeitet, in die drei, ebenfalls um 120 Grad zueinander versetzte Mitnehmer 58 (siehe Fig. 1) einragen. Die stiftförmigen Mitnehmer 58 sind jeweils mittels einer Gewindeverbindung 60 in die Umfangswand des Führungsabschnittes 34 des Federtellers 30 fest eingeschraubt und tragen im Bereich der Stellkulissen 56 wälzgelagerte Rollen 58a, die an den jeweils oben liegenden Halteflanken 56a der Stellkulissen 56 anlaufen.

Die Fig. 4 zeigt eine Abwicklung einer der Stellkulissen 56, die wie ersichtlich in einem definierten Winkel α schräg zur Umfangsrichtung des Stellringes 32 ausgeführt ist. An den jeweils oberen Halteflanken 56a sind am Anfang und Ende, sowie in einer Mittelstellung der Stellkulissen 56 drei sattelförmige Vertiefungen 56b (vgl. auch Fig. 3) eingearbeitet, die wie ersichtlich Rastierungen für die Mitnehmer 58 bzw. Mitnehmerrollen 58a bilden. Die Vertiefungen 56b sind konstruktiv so festgelegt, dass sie den Niveaustellungen der Karosserie des Kraftfahrzeuges in einer Normalniveaustellung, einer Hochniveaustellung und einer Tiefniveaustellung entsprechen.

In einer jeden Niveaustellung wirken die in gleicher Höhe (rotationssymmetrisch) am Führungsabschnitt 34 angeordneten Mitnehmer 58 über den Umfang des Stellringes 32 um 120 Grad versetzt mit der jeweiligen tiefsten, mittleren oder höchsten Vertiefung 56b zusammen, wobei durch die Rastierungsfunktion keine durch Federkräfte oder Radlasten wirkenden Verdrehmomente am Stellring 32 auftreten können.

Der Anschlagpuffer 16 (Fig. 1 und 2) ist mit Bezug zur Höhenposition des Federtellers 30 konstruktiv so ausgelegt, dass er in der Tiefniveaustellung der Karosserie des Kraftfahrzeuges am Zylindergehäuse 20 des Stoßdämpfers 14 zur Anlage kommt und dementsprechend als Zusatzfeder wirkt.

Wie insbesondere aus Fig. 2 ersichtlich ist, ist die Höhenverstellvorrichtung mit der Innenhülse 28, dem Stellring 32, dem oberen Federteller 30 mit Führungsabschnitt 34, dem Getriebe 40, 44, dem Schneckengetriebe 48, 50 und dem Elektromotor 52 mit Winkelcodierer 54 als eine Montageeinheit ausgeführt, die über den Befestigungsflansch 28a mit der Lagerkonsole 10 verschraubbar ist (nicht dargestellt).

Um ein Eindringen von Schmutz oder Feuchtigkeit in die Höhenverstellvorrichtung zu vermeiden, sind zudem zwischen dem Befestigungsflansch 28a und dem Federteller 30 sowie zwischen dem unteren Bereich des Führungsabschnittes 34 bei 34a und der freien Stirnseite der Innenhülse 28 gummielastische Schutzmanschetten 62, 64 vorgesehen, die in üblicher Weise mit Schlauchbindern, etc. wie ersichtlich befestigt sind.

Es sei angenommen, die Karosserie des Kraftfahrzeuges befindet sich in der Normalniveaustellung. Das entspricht der jeweils mittleren Vertiefung 56b in den Stellkulissen 56, in die die Mitnehmer 58 entsprechend eingerastet sind. Über den Winkelcodierer 54 des Elektormotors 52 kann das nicht dargestellte, elektronische Steuergerät dies erkennen.

Soll auf Hochniveaustellung (Fig. 4, rechte Vertiefung 56b) oder auf Tiefniveaustellung (Fig. 4, linke Vertiefung 56b) umgeschaltet werden, so steuert das Steuergerät den Elektromotor 52 entsprechend an und der Stellring 32 wird über das Schneckengetriebe 48, 50 und das Getriebe 44, 40 nach rechts oder links verdreht, bis die die entsprechende Niveaustellung definierende Vertiefung 56b erreicht ist. Dann wird ausgelöst durch ein Signal des Winkelcodierers 54 der Elektromotor 52 wieder stromlos geschaltet.

Durch das Verdrehen des Stellringes 32 nach rechts oder links relativ zur Innenhülse 28 und zum Federteller 30 mit Führungsabschnitt 34 wird über die Mitnehmer 58 der Federteller 30 entsprechend höhenverstellt.

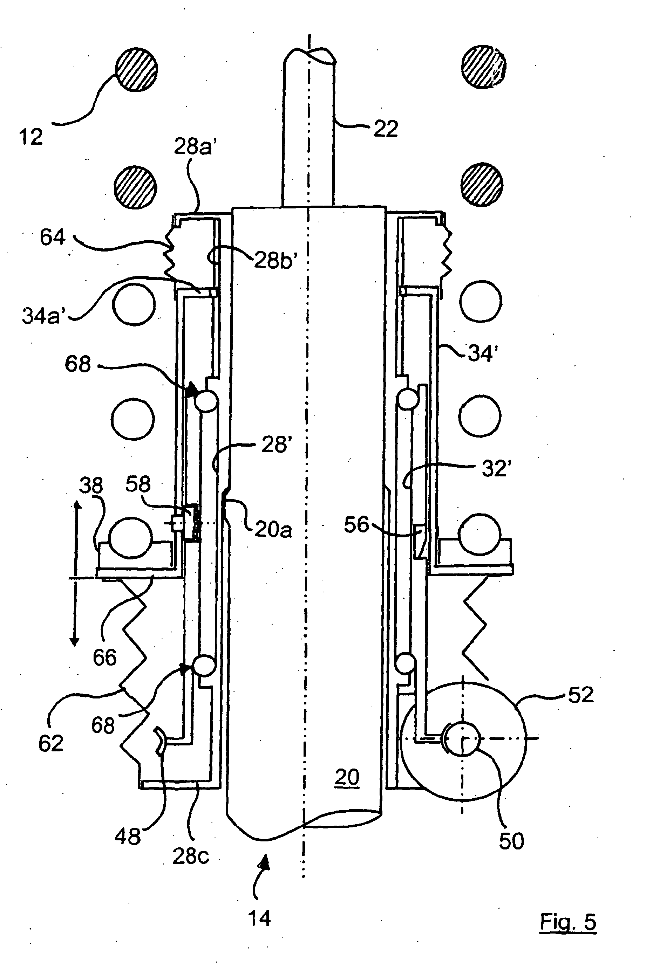

Die Fig. 5 zeigt eine weitere, alternative Höhenverstellvorrichtung, die zur Vermeidung von Wiederholungen nur soweit beschrieben ist, als sie sich wesentlich von der Ausführung gemäß den Fig. 1 bis 4 unterscheidet. Funktionell gleiche Teile sind mit gleichen Bezugszeichen versehen.

Abweichend zur vorstehenden Ausführung ist die Höhenverstellvorrichtung gemäß Fig. 5 am unteren Ende der Tragfeder 12 teils innerhalb der Tragfeder 12 und um das zylindrische Gehäuse 20 des Stoßdämpfers 14 herum angeordnet.

Dabei ist die Innenhülse 28' von oben auf das Gehäuse 20 des Stoßdämpfers 14 aufgesteckt, wobei sie sich über einen Abschnitt größeren Innendurchmessers wie ersichtich an in das Gehäuse 20 eingearbeiteten Ausbuchtungen 20a axial abstützt. Bevorzugt sind drei umfangsverteilte Ausbuchtungen 20a vorgesehen.

Der Stellring 32' ist über zwei zueinander beabstandete Schrägschulter-Kugellager 68 mit großer Abstützbasis auf dem Innenring 28' axial unverschiebbar gelagert und weist wie vorbeschrieben drei Stellkulissen 56 auf.

Die Tragfeder 12 ist an dem unteren Federteller 66 unter Zwischenschaltung eines Dämpfungsringes 38 abgestützt und weist den nunmehr nach oben ragenden Führungsabschnitt 34' auf, der auf dem Stellring 32' und auf der Innenhülse 28' über einen Bundabschnitt 34a' axial verschiebbar, jedoch in Längsnuten 28b' unverdrehbar geführt ist. Ferner sind an dem Führungsabschnitt 34' wiederum die in die Stellkulissen 56 einragenden Mitnehmer 58 befestigt.

Der Elektromotor 52 zur Verdrehung des Stellringes 32' ist unterhalb des unteren Federtellers 66 und tangential zu diesem angeordnet und treibt direkt über das selbsthemmende Schneckengetriebe mit der Schnecke 50 und dem an dem Stellring 32' angeordneten Schneckenrad 48 auf den Stellring 32'. Der Elektromotor 52 ist dabei an einem unteren Flansch 28c der Innenhülse 28' befestigt, an dem auch die eine Schutzmanschette 62 angeschlossen ist.

Die Funktion der Höhenverstellvorrichtung gemäß Fig. 5 ist wie vorstehend zu den Fig. 1 bis 4 beschrieben und deshalb nicht nochmals ausgeführt. Wie ersichtlich ist, kann die dargestellte Höhenverstellvorrichtung wiederum als Montageeinheit mit der Innenhülse 28', dem Stellring 32', dem Federteller 66 mit dem Führungsabschnitt 34', sowie mit dem angebauten Elektromotor 52 und den Schutzmanschetten 62, 64 ausgeführt und in einfacher Weise auf den Stoßdämpfer 14 aufgesteckt werden. Der Anschlagpuffer 16 kann ebenfalls wie vorstehend ausgeführt angeordnet sein.

Anstelle dreier Niveaustellungen können auch zwei oder mehr als drei Niveaustellungen vorgesehen sein, wobei die Stellkulissen 56 entsprechend zu modifizieren wären. Ggf. können gewünschte Niveaustellungen der Karosserie des Kraftfahrzeuges auch stufenlos (ohne Vertiefungen 56b) einstellbar sein, wobei dann Störmomente aus den Federkräften und Radlastmomenten über das selbsthemmende Schneckengetriebe 48, 50 oder eine separate Bremseinrichtung im Elektromotor 52 aufgefangen werden müssten. Ferner können anstelle von Vertiefungen 56b auch nur rotationssymmetrische Plateaus vorgesehen sein, die die Niveaustellungen definieren.
Die Erfindung gemäß den Fig. 1 bis 4 ist auch an Radaufhängungen anwendbar, bei denen der Stoßdämpfer 14 außerhalb der Tragfeder 12 angeordnet ist.

## Patentansprüche

1. Höhenverstellvorrichtung für Radaufhängungen von Kraftfahrzeugen, mit einer zwischen den Federteller (30) einer Tragfeder (12) und dem Aufbau oder einem Radaufhängungselement eingeschalteten, elektromechanischen Verstellvorrichtung, die teilweise innerhalb der Tragfeder (12) und ggf. um einen Teleskop-Stoßdämpfers herum angeordnet ist und die ein auf den Federteller (30) wirkendes Stellgetriebe aufweist, das von einem Elektromotor angetrieben ist, **dadurch gekennzeichnet, dass** das Stellgetriebe einen auf einer Innenhülse (28; 28') drehbar gelagerten, axial unverschiebbar gehaltenen Stellring (32; 32') aufweist, in den an seinem Außenumfang zumindest eine zur Umfangsrichtung schräge, nutförmige Stellkulisse (56) eingearbeitet ist, und dass der Federteller (30; 66) mit einem zylindrischen Führungsabschnitt (34; 34') sowohl auf dem Stellring (32; 32') als auch der Innenhülse (28; 28') axial verschiebbar geführt ist und in die Stellkulisse (56) des Stellrings eingreift.

2. Höhenverstellvorrichtung nach Anspruch 1, **dadurch gekennzeichnet, dass** der Führungsabschnitt (34; 34') des Federtellers (30; 66) zumindest einen in die Stellkulisse (56) einragenden Mitnehmer (58) trägt und/oder dass der Stellring (32; 32') mittels eines Getriebes (40, 44, 48, 50) über den Elektromotor (52) verdrehbar ist.

3. Höhenverstellvorrichtung nach Anspruch 1 oder 2, **dadurch gekennzeichnet, dass** über den Umfang des Stellringes (32; 32') drei um 120 Grad versetzt zueinander angeordnete, geometrisch gleiche Stellkulissen (56) eingearbeitet sind und dass drei ebenfalls 120 Grad versetzt zueinander ausgebildete Mitnehmer (58) des Stellringes (32; 32') in die Stellkulissen (56) einragen.

4. Höhenverstellvornchtung nach Anspruch 1, 2 oder 3, **dadurch gekennzeichnet, dass** die schräg verlaufenden Stellkulissen (56) mit sattelförmigen Vertiefungen (56b) an deren Halteflanken (56a) versehen sind.

5. Höhenverstellvorrichtung nach Anspruch 1, 2 oder 3, **dadurch gekennzeichnet, dass** die schräg verlaufenden Stellkulissen (56) mit rotationssymmetrischen Plateaus an deren Halteflanken (56a) versehen sind.

6. Höhenverstellvornchtung nach Anspruch 3 oder 4, **dadurch gekennzeichnet, dass** drei Vertiefungen (56b) oder Plateaus zur Definierung von drei Niveaustellungen der Karosserie des Kraftfahrzeuges vorgesehen sind.

7. Höhenverstellvorrichtung nach einem oder mehreren der vorhergehenden Ansprüche, **dadurch gekennzeichnet, dass** die Mitnehmer (58) im Bereich der Stellkulissen (56) wälzgelagerte Rollen (58a) aufweisen.

8. Höhenverstellvorrichtung nach einem oder mehreren der vorhergehenden Ansprüche, **dadurch gekennzeichnet, dass** der Stellring (32) an seiner druckbeaufschlagten Stirnseite (40) über ein Axialwälzlager (42) am Innenring (28) abgestützt ist.

9. Höhenverstellvorrichtung nach einem oder mehreren der vorhergehenden Ansprüche, **dadurch gekennzeichnet, dass** der Elektromotor (52) seitlich und oberhalb des Stellringes (32) angeordnet ist und den Stellring (32) über ein selbsthemmendes Schneckengetriebe (48, 50) direkt oder indirekt verstellt.

10. Höhenverstellvorrichtung nach Anspruch 8, **dadurch gekennzeichnet, dass** das selbsthemmende Schneckengetriebe (48, 50) über ein mit dem Schneckenrad (48) trieblich verbundenes Zahnritzel (44) und ein am Stellring (32) angeordnetes Zahnrad (40) auf den Stellring (32) wirkt, wobei das Zahnritzel (44) in einer Lagerstelle (46) im Befestigungsflansch (28a) der Innenhülse (28) drehbar gelagert ist.

11. Höhenverstellvornchtung nach einem oder mehreren der vorhergehenden Ansprüche, **dadurch gekennzeichnet, dass** bei Umschaltung der Niveaustellungen die Drehwinkellage des Stellringes (32; 32') relativ zum Federteller (30; 66) direkt oder indirekt erfassbar und auswertbar ist.

12. Höhenverstellvorrichtung nach Anspruch 10, **dadurch gekennzeichnet, dass** im Elektromotor (52) ein Winkelcodierer (54) zur Erfassung der Position des Stellringes (32; 32') vorgesehen ist.

13. Höhenverstellvorrichtung nach einem oder mehreren der vorhergehenden Ansprüche, **dadurch gekennzeichnet, dass** die Innenhülse (28), der Stellring (32), der Federteller (30) mit Führungsabschnitt (34), sowie der Elektromotor (52) mit Getriebe (40, 44, 48, 50) eine Montageeinheit bilden, die mit dem Aufbau oder einer am Aufbau befestigbaren Lagerkonsole (10) verschraubbar ist.

14. Höhenverstellvomichtung nach einem oder mehreren der vorhergehenden Ansprüche, **dadurch gekennzeichnet, dass** innerhalb der Innenhülse (28) ein um die Kolbenstange (22) des Stoßdämpfers (14) angeordneter, am Aufbau abgestützter, gummielastischer Anschlagpuffer (16) vorgesehen ist und dass der Anschlagpuffer (16) mit Bezug zur Position des Federtellers (30) so angeordnet ist, dass er in der Tiefniveaustellung als Zusatzfeder wirksam ist.

15. Höhenverstellvorrichtung nach einem oder mehreren der vorhergehenden Ansprüche, **dadurch gekennzeichnet, dass** zwischen einem Flansch (28a; 28c) der Innenhülse (28; 28') und dem Federteller (30; 66) eine den Stellring (32; 32') und das Getriebe (40, 44; 48, 50) abdeckende, gummielastische Schutzmanschette (62) vorgesehen ist.

16. Höhenverstellvornchtung nach einem oder mehreren der vorhergehenden Ansprüche, **dadurch gekennzeichnet, dass** zwischen der freien Stirnseite der Innenhülse (28; 28') und dem zylindrischen Führungsabschnitt (34; 34') des Federtellers (30; 66) eine gummielastische Schutzmanschette (64) angeordnet ist.

17. Höhenverstellvorrichtung nach einem oder mehreren der vorhergehenden Ansprüche, **dadurch gekennzeichnet, dass** das Stellgetriebe (28', 32', 34', 66, 56, 58) um das zylindrische Gehäuse (20) des Stoßdämpfers (14) als Radaufhängungselement des Kraftfahrzeuges angeordnet ist und auf den unteren Federteller (66) der Tragfeder (12) wirkt.

18. Höhenverstellvorrichtung nach Anspruch 16, **dadurch gekennzeichnet, dass** die Innenhülse (28'), der Stellring (32'), der Federteller (66) mit Führungsabschnitt (34'), sowie der Elektromotor (52) mit Getriebe (48, 50) eine Montageeinheit bilden, die auf das Gehäuse (20) des Stoßdämpfers (14) aufsteckbar ist.

19. Höhenverstellvorrichtung nach Anspruch 17, **dadurch gekennzeichnet, dass** die Innenhülse (28') mit einem Bereich kleineren Innendurchmessers an Ausbuchtungen (20a) des Gehäuses (20) des Stoßdämpfers (14) axial abgestützt ist.

20. Höhenverstellvorrichtung nach einem oder mehreren der vorhergehenden Ansprüche, **dadurch gekennzeichnet, dass** der Stellring (32') mittels zweier, axial zueinander beabstandeter Schrägschulterlager (68) axial unverschiebbar auf der Innenhülse (28') drehbar gelagert ist.

21. Höhenverstellvorrichtung nach einem oder mehreren der vorhergehenden Ansprüche, **dadurch gekennzeichnet, dass** der Elektromotor (52) unterhalb des Federtellers (66) tangential zu diesem angeordnet ist, wobei dessen Schnecke (50) direkt auf das am Stellring (32') ausgebildete Schneckenrad (48) wirkt.

## Claims

1. Height-adjusting device for wheel suspension systems of motor vehicles, having an electromechanical adjusting device which is connected between the spring collar (30) of a bearing spring (12) and the superstructure or a wheel suspension element, is arranged partially within the bearing spring (12) and optionally around a telescopic shock absorber, and has an actuating mechanism which acts on the spring collar (30) and is driven by an electric motor, **characterized in that** the actuating mechanism has an actuating ring (32; 32') which is mounted rotatably on an inner sleeve (28; 28'), is held such that it cannot be displaced axially, and into which, on its outer circumference, at least one groove-shaped actuating gate (56) which is oblique with respect to the circumferential direction is machined, and **in that** the spring collar (30; 66) is guided with a cylindrical guide section (34; 34') such that it can be displaced axially both on the actuating ring (32; 32') and on the inner sleeve (28; 28'), and engages into the actuating gate (56) of the actuating ring.

2. Height-adjusting device according to Claim 1, **characterized in that** the guide section (34; 34') of the spring collar (30; 66) carries at least one driver (58) which protrudes into the actuating gate (56), and/or **in that** the actuating ring (32; 32') can be rotated by means of a mechanism (40, 44, 48, 50) via the electric motor (52).

3. Height-adjusting device according to Claim 1 or 2, **characterized in that** three geometrically identical actuating gates (56) which are arranged offset by 120 degrees with respect to one another are machined over the circumference of the actuating ring (32; 32'), and **in that** three drivers (58) of the actuating ring (32; 32') which are configured offset by likewise 120 degrees with respect to one another protrude into the actuating gates (56).

4. Height-adjusting device according to Claim 1, 2 or 3, **characterized in that** the obliquely running actuating gates (56) are provided with saddle-shaped depressions (56b) on their holding flanks (56a).

5. Height-adjusting device according to Claim 1, 2 or 3, **characterized in that** the obliquely running actuating gates (56) are provided with rotationally symmetrical flat portions on their holding flanks (56a).

6. Height-adjusting device according to Claim 3 or 4, **characterized in that** three depressions (56b) or flat portions are provided in order to define three ride-level positions of the body of the motor vehicle.

7. Height-adjusting device according to one or more of the preceding claims, **characterized in that** the drivers (58) have rollers (58a) which are roller-mounted in the region of the actuating gates (56).

8. Height-adjusting device according to one or more of the preceding claims, **characterized in that** the actuating ring (32) is supported on its pressure-loaded end side (40) via an axial anti-friction bearing (42) on the inner ring (28).

9. Height-adjusting device according to one or more of the preceding claims, **characterized in that** the electric motor (52) is arranged to the side and above the actuating ring (32) and adjusts the actuating ring (32) directly or indirectly via a self-locking worm mechanism (48, 50).

10. Height-adjusting device according to Claim 8, **characterized in that** the self-locking worm mechanism (48, 50) acts on the actuating ring (32) via a toothed pinion (44) which is drive-connected to the worm gear (48) and via a gearwheel (40) which is arranged on the actuating ring (32), the toothed pinion (44) being mounted rotatably in a bearing point (46) in the fastening flange (28a) of the inner sleeve (28).

11. Height-adjusting device according to one or more of the preceding claims, **characterized in that**, during a changeover of the ride-level positions, the rotary angle position of the actuating ring (32; 32') can be detected directly or indirectly relative to the spring collar (30; 66) and can be evaluated.

12. Height-adjusting device according to Claim 10, **characterized in that** an angular encoder (54) is provided in the electric motor (52) in order to detect the position of the actuating ring (32; 32').

13. Height-adjusting device according to one or more of the preceding claims, **characterized in that** the inner sleeve (28), the actuating ring (32), the spring collar (30) with guide section (34), and the electric motor (52) with mechanism (40, 44, 48, 50) form one assembly unit which can be screwed to the superstructure or a bearing bracket (10) which can be fastened to the superstructure.

14. Height-adjusting device according to one or more of the preceding claims, **characterized in that** an elastomeric stop buffer (16) which is arranged around the piston rod (22) of the shock absorber (14) and is supported on the superstructure is provided within the inner sleeve (28), and **in that** the stop buffer (16) is arranged in relation to the position of the spring collar (30) in such a way that it is active as an additional spring in the low ride-level position.

15. Height-adjusting device according to one or more of the preceding claims, **characterized in that** an elastomeric protective collar (62) which covers the actuating ring (32; 32') and the mechanism (40, 44; 48, 50) is provided between a flange (28a; 28c) of the inner sleeve (28; 28') and the spring collar (30; 66).

16. Height-adjusting device according to one or more of the preceding claims, **characterized in that** an elastomeric protective collar (64) is arranged between the free end side of the inner sleeve (28; 28') and the cylindrical guide section (34; 34') of the spring collar (30; 66).

17. Height-adjusting device according to one or more of the preceding claims, **characterized in that** the actuating mechanism (28', 32', 34', 66, 56, 58) is arranged around the cylindrical housing (20) of the shock absorber (14) as wheel suspension element of the motor vehicle and acts on the lower spring collar (66) of the bearing spring (12).

18. Height-adjusting device according to Claim 16, **characterized in that** the inner sleeve (28'), the actuating ring (32'), the spring collar (66) with guide section (34'), and the electric motor (52) with mechanism (48, 50) form one assembly unit which can be plugged onto the housing (20) of the shock absorber (14).

19. Height-adjusting device according to Claim 17, **characterized in that** the inner sleeve (28') is supported axially with a region of smaller internal diameter on bulges (20a) of the housing (20) of the shock absorber (14).

20. Height-adjusting device according to one or more of the preceding claims, **characterized in that** the actuating ring (32') is mounted rotatably on the inner sleeve (28') such that it cannot be displaced axially by means of two inclined shoulder bearings (68) which are spaced apart axially from one another.

21. Height-adjusting device according to one or more of the preceding claims, **characterized in that** the electric motor (52) is arranged below the spring collar (66) tangentially with respect to the latter, the worm (50) of the said electric motor (52) acting directly on the worm gear (48) which is formed on the actuating ring (32').

## Revendications

1. Dispositif de réglage en hauteur pour suspensions de roues de véhicules automobiles, comprenant un dispositif de réglage électromécanique monté entre la coupelle de ressort (30) d'un ressort de support (12) et la caisse ou un élément de suspension de roue, lequel est disposé en partie à l'intérieur du ressort de support (12) et éventuellement autour d'un amortisseur télescopique, et qui présente un mécanisme de réglage agissant sur la coupelle de ressort (30), qui est entraîné par un moteur électrique, **caractérisé en ce que** le mécanisme de réglage présente un anneau de réglage (32 ; 32') maintenu de manière fixe axialement et monté à rotation sur une douille interne (28 ; 28'), dans lequel, sur sa circonférence extérieure, est réalisée au moins une coulisse de réglage (56) en forme de rainure oblique par rapport à la direction circonférentielle, et **en ce que** la coupelle de ressort (30 ; 66) est guidée de manière axialement mobile avec une portion de guidage cylindrique (34 ; 34') à la fois sur l'anneau de réglage (32 ; 32') et sur la douille interne (28 ; 28') et vient en prise dans la coulisse de réglage (56) de l'anneau de réglage.

2. Dispositif de réglage en hauteur selon la revendication 1, **caractérisé en ce que** la portion de guidage (34 ; 34') de la coupelle de ressort (30 ; 66) porte au moins un dispositif d'entraînement (58) pénétrant dans la coulisse de réglage (56) et/ou **en ce que** l'anneau de réglage (32 ; 32') peut tourner au moyen d'un mécanisme (40, 44, 48, 50) par le biais du moteur électrique (52).

3. Dispositif de réglage en hauteur selon la revendication 1 ou 2, **caractérisé en ce que** trois coulisses de réglage (56) géométriquement identiques disposées de manière décalée les unes par rapport aux autres de 120 degrés sont pratiquées sur la circonférence de l'anneau de réglage (32 ; 32'), et **en ce que** trois dispositifs d'entraînement (58) de l'anneau de réglage (32 ; 32') réalisés également de manière décalée les uns par rapport aux autres de 120 degrés pénètrent dans les coulisses de réglage (56).

4. Dispositif de réglage en hauteur selon la revendication 1, 2 ou 3, **caractérisé en ce que** les coulisses de réglage (56) s'étendant obliquement sont pourvues de renfoncements en forme de selle (56b) sur leurs flancs de retenue (56a).

5. Dispositif de réglage en hauteur selon la revendication 1, 2 ou 3, **caractérisé en ce que** les coulisses de réglage (56) s'étendant obliquement sont pourvues de plateaux à symétrie de révolution sur leurs flancs de retenue (56a).

6. Dispositif de réglage en hauteur selon la revendication 3 ou 4, **caractérisé en ce que** trois renfoncements (56b) ou plateaux sont prévus pour définir trois positions de niveau de la carrosserie du véhicule automobile.

7. Dispositif de réglage en hauteur selon l'une quelconque ou plusieurs des revendications précédentes, **caractérisé en ce que** les dispositifs d'entraînement (58) présentent des galets (58a) montés sur rouleaux dans la région des coulisses de réglage (56).

8. Dispositif de réglage en hauteur selon l'une quelconque ou plusieurs des revendications précédentes, **caractérisé en ce que** l'anneau de réglage (32) est supporté au niveau de son côté frontal (40) sollicité en pression par le biais d'un palier à roulement axial (42) contre la douille interne (28).

9. Dispositif de réglage en hauteur selon l'une quelconque ou plusieurs des revendications précédentes, **caractérisé en ce que** le moteur électrique (52) est disposé latéralement et au-dessus de l'anneau de réglage (32) et l'anneau de réglage (32) est déplacé directement ou indirectement par le biais d'un mécanisme à vis sans fin autobloquant (48, 50).

10. Dispositif de réglage en hauteur selon la revendication 8, **caractérisé en ce que** le mécanisme à vis sans fin autobloquant (48, 50) agit sur l'anneau de réglage (32) par le biais d'un pignon denté (44) connecté par entraînement à la roue à denture hélicoïdale (48) et d'une roue dentée (40) disposée sur l'anneau de réglage (32), le pignon denté (44) étant monté à rotation dans un palier (46) dans la bride de fixation (28a) de la douille interne (28).

11. Dispositif de réglage en hauteur selon l'une quelconque ou plusieurs des revendications précédentes, **caractérisé en ce que** lors de l'inversion des positions de niveau, la position de l'angle de rotation de l'anneau de réglage (32 ; 32') par rapport à la coupelle de ressort (30 ; 66) peut être détectée et analysée directement ou indirectement.

12. Dispositif de réglage en hauteur selon la revendication 10, **caractérisé en ce que** dans le moteur électrique (52) est prévu un codeur angulaire (54) pour détecter la position de l'anneau de réglage (32 ; 32').

13. Dispositif de réglage en hauteur selon l'une quelconque ou plusieurs des revendications précédentes, **caractérisé en ce que** la douille interne (28), l'anneau de réglage (32), la coupelle de ressort (30) avec la portion de guidage (34), ainsi que le moteur électrique (52) avec le mécanisme (40, 44, 48, 50) forment une unité de montage, qui peut être vissée à la caisse ou à une console de support (10) pouvant être fixée sur la caisse.

14. Dispositif de réglage en hauteur selon l'une quelconque ou plusieurs des revendications précédentes, **caractérisé en ce qu'**un tampon de butée (16) en caoutchouc élastomère, supporté sur la caisse, disposé autour de la tige de piston (22) de l'amortisseur (14), est prévu à l'intérieur de la douille interne (28) et **en ce que** le tampon de butée (16) est disposé par rapport à la position de la coupelle de ressort (30) de telle sorte qu'il agisse en tant que ressort supplémentaire dans la position de niveau bas.

15. Dispositif de réglage en hauteur selon l'une quelconque ou plusieurs des revendications précédentes, **caractérisé en ce qu'**entre une bride (28a ; 28c) de la douille interne (28 ; 28') et la coupelle de ressort (30 ; 66) est prévue une manchette de protection (62) en caoutchouc élastomère recouvrant l'anneau de réglage (32 ; 32') et le mécanisme (40, 44 ; 48, 50).

16. Dispositif de réglage en hauteur selon l'une quelconque ou plusieurs des revendications précédentes, **caractérisé en ce qu'**entre le côté frontal libre de la douille interne (28 ; 28') et la portion de guidage cylindrique (34 ; 34') de la coupelle de ressort (30 ; 66) est disposée une manchette de protection (64) en caoutchouc élastomère.

17. Dispositif de réglage en hauteur selon l'une quelconque ou plusieurs des revendications précédentes, **caractérisé en ce que** le mécanisme de réglage (28', 32', 34', 66, 56, 58) est disposé en tant qu'élément de suspension de roue du véhicule automobile autour du boîtier cylindrique (20) de l'amortisseur (14) et agit sur la coupelle de ressort inférieure (66) du ressort de support (12).

18. Dispositif de réglage en hauteur selon la revendication 16, **caractérisé en ce que** la douille interne (28'), l'anneau de réglage (32'), la coupelle de ressort (66) avec la portion de guidage (34'), ainsi que le moteur électrique (52) avec le mécanisme (48, 50) forment une unité de montage qui peut être enfichée sur le boîtier (20) de l'amortisseur (14).

19. Dispositif de réglage en hauteur selon la revendication 17, **caractérisé en ce que** la douille interne (28') est supportée axialement avec une région de plus petit diamètre intérieur sur des renflements (20a) du boîtier (20) de l'amortisseur (14).

20. Dispositif de réglage en hauteur selon l'une quelconque ou plusieurs des revendications précédentes, **caractérisé en ce que** l'anneau de réglage (32') est supporté en rotation de manière axialement immobile sur la douille interne (28') au moyen de deux supports à épaulement oblique (68) espacés axialement l'un de l'autre.

21. Dispositif de réglage en hauteur selon l'une quelconque ou plusieurs des revendications précédentes, **caractérisé en ce que** le moteur électrique (52) est disposé sous la coupelle de ressort (66) tangentiellement à celle-ci, sa vis sans fin (50) agissant directement sur la roue à denture hélicoïdale (48) réalisée sur l'anneau de réglage (32').
